(19) Europäisches Patentamt
European Patent Office
Office européen des brevets

(11) EP 4 597 667 A1

(12) **EUROPEAN PATENT APPLICATION**
published in accordance with Art. 153(4) EPC

(43) Date of publication:
**06.08.2025 Bulletin 2025/32**

(21) Application number: **23869594.4**

(22) Date of filing: **27.04.2023**

(51) International Patent Classification (IPC):
***H01M 10/0525*** *(2010.01)* ***H01M 10/0567*** *(2010.01)*

(52) Cooperative Patent Classification (CPC):
**H01M 10/0567; H01M 10/0525; H01M 10/0568; H01M 10/0569; H01M 10/4235;** Y02E 60/10

(86) International application number:
**PCT/CN2023/091190**

(87) International publication number:
**WO 2024/066339 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 CN 202211211360**

(71) Applicant: **Ningde Amperex Technology Limited**
**Ningde, Fujian 352100 (CN)**

(72) Inventors:
- **ZHENG, Yezhen**
  **Ningde, Fujian 352100 (CN)**
- **ZHOU, Shaoyun**
  **Ningde, Fujian 352100 (CN)**

(74) Representative: **Icosa**
**83 avenue Denfert-Rochereau**
**75014 Paris (FR)**

# (54) LITHIUM-ION BATTERY AND ELECTROCHEMICAL DEVICE COMPRISING SAME

(57) A lithium-ion battery includes an electrolytic solution and a negative electrode plate. The electrolytic solution includes vinylene carbonate and fluoroethylene carbonate. The negative electrode plate includes a negative active material. An OI value of the negative active material is a. Based on a weight of the electrolytic solution, a weight percent of the vinylene carbonate is b%, and a weight percent of the fluoroethylene carbonate is c%; and a, b, and c satisfy: $0.3 \leq a/(b + c) \leq 6$; $0.02 \leq b + c \leq 10$; and $0.1 < b/c < 3$.



Processed by Luminess, 75001 PARIS (FR)

## Description

This application claims priority to Chinese Patent Application No. 202211211360.7, filed on September 30, 2022 and entitled "LITHIUM-ION BATTERY AND ELECTROCHEMICAL DEVICE CONTAINING SAME", which is incorporated herein by reference in its entirety.

## TECHNICAL FIELD

This application relates to the technical field of electrochemical devices, and in particular, to a lithium-ion battery and an electrochemical device containing same.

## BACKGROUND

As a new type of mobile energy storage device, a secondary battery (such as a lithium-ion secondary battery) has been widely used in the field of portable electronic devices such as a mobile phone, a notebook computer, and a video camera by virtue of a high energy density, a high working voltage, a long cycle life, no memory effect, and environment-friendliness. The application range of the secondary battery is expanding from small portable electronic devices to large electric vehicles and renewable energy storage.

Currently, a graphite-based negative electrode material is a mainstream negative electrode material for use in a lithium-ion secondary battery, and is primarily classed into artificial graphite and natural graphite. Natural graphite is characterized by a high capacity, a high compacted density, and cost-effectiveness. However, the particles of the natural graphite are not uniform in size, and include relatively many surface defects, and therefore, are scarcely compatible with an electrolytic solution, incur relatively many side reactions, and tend to expand in volume during cycling, thereby increasing the internal stress of the battery and impairing the service life and safety performance of the battery.

## SUMMARY

In view of the problems in the prior art, this application provides a lithium-ion battery and an electrochemical device containing the lithium-ion battery to improve cycle performance and high-temperature storage performance of the electrochemical device.

A first aspect of this application provides a lithium-ion battery. The lithium-ion battery includes an electrolytic solution and a negative electrode plate. The electrolytic solution includes vinylene carbonate and fluoroethylene carbonate. The negative electrode plate includes a negative active material. An OI value of the negative active material is a. Based on a weight of the electrolytic solution, a weight percent of the vinylene carbonate is b%, and a weight percent of the fluoroethylene carbonate is c%; and a, b, and c satisfy: $0.3 \leq a/(b + c) \leq 6$; $0.02 \leq b + c \leq 10$; and $0.1 < b/c < 3$. When the OI value of the negative active material, the weight percent of vinylene carbonate, and the weight percent of fluoroethylene carbonate satisfy the specified relations, the damage to the SEI film caused by the volume expansion of the negative active material can be reduced, and a tough SEI film is formed on the surface of the negative electrode, thereby significantly reducing the internal resistance of the lithium-ion battery and improving the high-temperature storage performance and cycle performance of the lithium-ion battery.

In some embodiments, $0.4 \leq a/(b + c) \leq 3$.

In some embodiments, $0.2 \leq b + c \leq 5$.

In some embodiments, $0.5 \leq b/c \leq 2.5$.

In some embodiments, the OI value of the negative active material is a, and a falls within a range of $2 \leq a \leq 15$. In some embodiments, $3 \leq a \leq 7$.

In some embodiments, based on the weight of the electrolytic solution, a weight percent of the vinylene carbonate is b%, and b falls within a range of $0.01 \leq b \leq 10$. In some embodiments, $0.1 \leq b \leq 5$.

In some embodiments, based on the weight of the electrolytic solution, a weight percent of the fluoroethylene carbonate is c%, and c falls within a range of $0.01 \leq c \leq 10$. In some embodiments, $0.1 \leq c \leq 5$.

In some embodiments, the negative active material includes natural graphite. The OI value of the negative active material is an orientation index of the negative active material, and is a ratio of a peak area of the 004 characteristic diffraction peak to a peak area of the 110 characteristic diffraction peak in an X-ray diffraction pattern of the negative active material.

In some embodiments, an electrolyte retention coefficient of the lithium-ion battery is e; and b, c, and e satisfy: $0.01 \leq e \times (b + c) \leq 50$.

In some embodiments, the electrolyte retention coefficient e of the lithium-ion battery satisfies: $1 \leq e \leq 7$.

In some embodiments, the specific surface area of the negative active material is f $m^2/g$, and f falls within a range of $1 \leq f \leq 3$.

In some embodiments, the electrolytic solution includes a compound B represented by Formula (II):

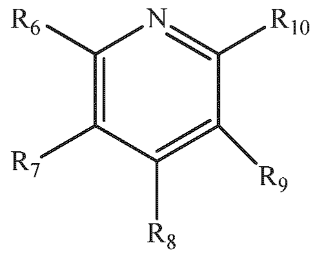

(II)

In the formula above:

$R_6$, $R_7$, $R_8$, $R_9$ and $R_{10}$ are each independently selected from hydrogen, a cyano group, a halogen atom, a $C_1$ to $C_{10}$ alkyl, a $C_2$ to $C_{10}$ alkenyl, a $C_2$ to $C_{10}$ alkynyl, a $C_3$ to $C_6$ heterocyclyl, a $C_5$ to $C_6$ aryl, a $C_5$ to $C_6$ heteroaryl, $-R_{11}-(C=O)-R_{12}-$, $-R_{11}-(C=O)-O-R_{12}-$, or $-R_{11}-(C=O)-NH-R_{12}-$, or any adjacent two of $R_6$, $R_7$, $R_8$, $R_9$, or $R_{10}$ are connected to each other to form a $C_1$ to $C_{10}$ ring structure; $R_{11}$ and $R_{12}$ are each independently selected from a single bond, the $C_1$ to $C_{10}$ alkyl, the $C_2$ to $C_{10}$ alkenyl, the $C_2$ to $C_{10}$ alkynyl, the $C_3$ to $C_6$ heterocyclyl, the $C_5$ to $C_6$ aryl, or the $C_5$ to $C_6$ heteroaryl; and the $C_1$ to $C_{10}$ alkyl, the $C_2$ to $C_{10}$ alkenyl, the $C_2$ to $C_{10}$ alkynyl, the $C_3$ to $C_6$ heterocyclyl, the $C_5$ to $C_6$ aryl, the $C_5$ to $C_6$ heteroaryl, or the $C_1$ to $C_{10}$ ring structure is optionally substituted by one or more amino groups, cyano groups, halogen atoms, $C_1$ to $C_3$ alkyls, $C_3$ to $C_6$ heterocyclyls, or $C_5$ to $C_6$ heteroaryls.

In some embodiments, the compound B represented by Formula (II) includes at least one of: pyridine, 2-picoline, 2-vinylpyridine, 2- ethynylpyridine, 2-fluoropyridine, 2-cyanopyridine, 3-vinylpyridine, 3-fluoropyridine, 2,6-difluoropyridine, pentafluoropyridine, 2,2'-bipyridine, terpyridine, 1,8-naphthyridine, or 5,6,7,8-tetrahydroquinoline.

In some embodiments, the compound B represented by Formula (II) includes at least one of: pyridine, 2-vinylpyridine, or 2-fluoropyridine.

In some embodiments, based on the weight of the electrolytic solution, a weight percent of the compound represented by Formula (II) is k%, and k satisfies: $0 \leq k < 3$.

In some embodiments, $Dv_{50}$ of the negative active material is g μm, and g satisfies: $10 \leq g \leq 25$.

In some embodiments, a compacted density of the negative active material is h $g/cm^3$, and h satisfies $1 \leq h \leq 1.8$.

A second aspect of this application provides an electrochemical device. The electrochemical device includes the lithium-ion battery according to the first aspect of this application.

By setting the OI value of the negative active material, the weight percent of vinylene carbonate in the electrolytic solution, and the weight percent of fluoroethylene carbonate in the electrolytic solution to satisfy the specified relations, this application can alleviate the damage to the SEI film caused by the volume expansion of the negative active material, alleviate the resultant problems of deterioration of the cycle performance and storage performance, alleviate the expansion and gassing problems, and enhance the cycle performance and high-temperature storage performance of the lithium-ion battery.

## DETAILED DESCRIPTION

To make the objectives, technical solutions, and advantages of this application clearer, the following gives a clear and comprehensive description of the technical solutions of this application with reference to embodiments. Evidently, the described embodiments are merely a part of but not all of the embodiments of this application. The embodiments described herein are illustrative in nature, and are intended to enable a basic understanding of this application. No embodiment of this application is to be construed as a limitation on this application.

A first aspect of this application provides a lithium-ion battery. The lithium-ion battery includes an electrolytic solution and a negative electrode plate. The electrolytic solution includes vinylene carbonate and fluoroethylene carbonate. The negative electrode plate includes a negative active material. An OI value of the negative active material is a. Based on a weight of the electrolytic solution, a weight percent of the vinylene carbonate is b%, and a weight percent of the fluoroethylene carbonate is c%; and a, b, and c satisfy: $0.3 \leq a/(b + c) \leq 6$; $0.02 \leq b + c \leq 10$; and $0.1 < b/c < 3$.

In the description of this application, when the OI value of the negative active material is small, the compacted density is in an appropriate range, the direction selectivity of the natural graphite in a lithiation process is low, and the lithiation-induced expansion can be dispersed in all directions, thereby reducing the cycle expansion of the electrode plate and the battery. Because the SEI film formed by the vinylene carbonate and the fluoroethylene carbonate exhibits a high impedance, an appropriate amount of additives needs to be added on the premise of ensuring high performance. When the OI value of the negative electrode material is large, the cycle expansion of the electrode plate and the battery is severe, and

the proportion of the end faces of the material is increased. Consequently, side reactions are increased on the surface, and more gas is generated. In this case, more vinylene carbonate and fluoroethylene carbonate are needed to protect the negative electrode material and alleviate the expansion and gassing problems. In the description of this application, the vinylene carbonate primarily generates PEO-type polymer SEI films, and the fluoroethylene carbonate primarily generates LiF and other SEI films that contain inorganic components. An SEI film richly containing organic and inorganic constituents can be generated on the surface of the negative electrode on condition that the weight percent of the vinylene carbonate and the fluoroethylene carbonate satisfies the above rations. This film is tough and resilient to some extent, and can alleviate the problems of deterioration of the cycle performance and storage performance arising from the damage to the SEI film caused by the volume expansion of the natural graphite.

In some embodiments, the lithium-ion battery according to this application includes, but is not limited to, a positive electrode plate, a negative electrode plate, a separator, an electrolytic solution, and the like.

**Electrolytic solution:**

In some embodiments, $0.4 \leq a/(b + c) \leq 3$. When the weight percent of the vinylene carbonate and the fluoroethylene carbonate as well as the OI value of the negative electrode material fall within the specified range, the lithium-ion battery exhibits higher cycle performance and high-temperature storage performance.

In some embodiments, $0.2 \leq b + c \leq 5$ and/or $0.5 \leq b/c \leq 2.5$. When the weight percent of the vinylene carbonate and the fluoroethylene carbonate satisfies the specified relations, an SEI film richly containing organic and inorganic constituents can be generated on the surface of the negative electrode. This film is tough and resilient to some extent, and can alleviate the damage to the SEI film caused by the volume expansion of the natural graphite, and achieve higher cycle performance and high-temperature storage performance of the lithium-ion battery.

In some embodiments, based on the weight of the electrolytic solution, a weight percent of the vinylene carbonate is b%, and b falls within a range of $0.01 \leq b \leq 10$. The weight percent falling within such a range can further improve ion transport in the electrolytic solution and enhance the battery performance. In some embodiments, $0.1 \leq b \leq 5$.

In some embodiments, based on the weight of the electrolytic solution, a weight percent of the fluoroethylene carbonate is c%, and c falls within a range of $0.01 \leq c \leq 10$. The weight percent falling within such a range can improve the toughness of the SEI film of the negative electrode. In some embodiments, c falls within a range of $0.1 \leq c \leq 5$.

In some embodiments, an electrolyte retention coefficient of the lithium-ion battery is e; and b, c, and e satisfy: $0.01 \leq e \times (b + c) \leq 50$. An appropriate amount of retained electrolytic solution can further improve the ion transport in the electrolytic solution and improve the cycle performance of the battery. In some embodiments, the electrolyte retention coefficient e of the lithium-ion battery satisfies: $1 \leq e \leq 7$.

In some embodiments, the electrolytic solution includes a compound B represented by Formula (II):

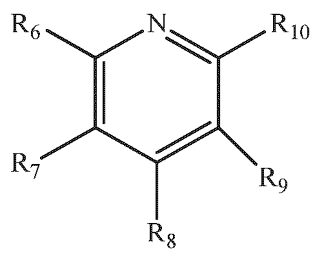

(II)

In the formula above:

$R_6$, $R_7$, $R_8$, $R_9$ and $R_{10}$ are each independently selected from hydrogen, a cyano group, a halogen atom, a $C_1$ to $C_{10}$ alkyl, a $C_2$ to $C_{10}$ alkenyl, a $C_2$ to $C_{10}$ alkynyl, a $C_3$ to $C_6$ heterocyclyl, a $C_5$ to $C_6$ aryl, a $C_5$ to $C_6$ heteroaryl, $-R_{11}-(C=O)-R_{12}-$, $-R_{11}-(C=O)-O-R_{12}-$, or $-R_{11}-(C=O)-NH-R_{12}-$, or any adjacent two of $R_6$, $R_7$, $R_8$, $R_9$, or $R_{10}$ are connected to each other to form a $C_1$ to $C_{10}$ ring structure; $R_{11}$ and $R_{12}$ are each independently selected from a single bond, the $C_1$ to $C_{10}$ alkyl, the $C_2$ to $C_{10}$ alkenyl, the $C_2$ to $C_{10}$ alkynyl, the $C_3$ to $C_6$ heterocyclyl, the $C_5$ to $C_6$ aryl, or the $C_5$ to $C_6$ heteroaryl; and the $C_1$ to $C_{10}$ alkyl, the $C_2$ to $C_{10}$ alkenyl, the $C_2$ to $C_{10}$ alkynyl, the $C_3$ to $C_6$ heterocyclyl, the $C_5$ to $C_6$ aryl, the $C_5$ to $C_6$ heteroaryl, or the $C_1$ to $C_{10}$ ring structure is optionally substituted by one or more amino groups, cyano groups, halogen atoms, $C_1$ to $C_3$ alkyls, $C_3$ to $C_6$ heterocyclyls, or $C_5$ to $C_6$ heteroaryls.

In some embodiments, the compound B represented by Formula (II) includes at least one of: pyridine, 2-picoline, 2-vinylpyridine, 2- ethynylpyridine, 2-fluoropyridine, 2-cyanopyridine, 3-vinylpyridine, 3-fluoropyridine, 2,6-difluoropyridine, pentafluoropyridine, 2,2'-bipyridine, terpyridine, 1,8-naphthyridine, or 5,6,7,8-tetrahydroquinoline.

In some embodiments, the compound B represented by Formula (II) includes at least one of: pyridine, 2-vinylpyridine, or 2-fluoropyridine. The compound B represented by Formula (II) can suppress the consumption of the solvent and the film-forming additive during cycling and storage, thereby further improving the cycle performance.

In some embodiments, based on the weight of the electrolytic solution, a weight percent of the compound represented by Formula (II) is k%, and k satisfies: $0 \le k < 3$. In this way, the lithium-ion battery exhibits higher cycle performance.

In some embodiments, the electrolytic solution includes a lithium salt and an organic solvent.

In some embodiments, the lithium salt includes at least one of an organic lithium salt or an inorganic lithium salt. In some embodiments, the lithium salt is at least one selected from the following compounds: lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bis(oxalato)borate $LiB(C_2O_4)_2$ (LiBOB), or lithium difluoro(oxalato)borate $LiBF_2(C_2O_4)$ (LiDFOB).

In some embodiments, the organic solvent may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE).

In some embodiments, the electrolytic solution further optionally includes an additive. For example, the additive may include a negative film-forming additive, a positive film-forming additive, and additives that can improve some performance of the battery, for example, an additive that improves overcharge performance of the battery, an additive that improves high-temperature performance of the battery, and an additive that improves low-temperature performance of the battery, and the like.

**Negative electrode:**

In some embodiments, the negative electrode includes a negative electrode plate. The negative electrode plate includes a negative current collector and a negative active material layer applied on the current collector. The negative active material layer includes a negative active material. The negative active material includes graphite. The graphite includes at least one of natural graphite or artificial graphite.

In some embodiments, the negative active material is preferably natural graphite.

In some embodiments, the OI value of the negative active material is a, and a falls within a range of $2 \le a \le 15$. When the OI value of the negative electrode material falls within such a range, the proportion of the end faces of the graphite material is reduced, and the side reactions are reduced, thereby further improving the cycle performance and high-temperature storage performance of the lithium-ion battery. In some embodiments, $3 \le a \le 7$.

In some embodiments, the specific surface area of the negative active material is f $m^2/g$, and f falls within a range of $1 \le f \le 3$. When the specific surface area of the negative active material falls within such a range, the negative active material is ensured to be in sufficient contact with the electrolytic solution, and the side reactions between the negative active material and the electrolytic solution are reduced, thereby further improving the cycle performance of the battery.

In some embodiments, $Dv_{50}$ of the negative active material is g $\mu m$, and g satisfies: $10 \le g \le 25$.

In some embodiments, a compacted density of the negative active material is h $g/cm^3$, and h satisfies $1 \le h \le 1.8$.

In some embodiments, the negative active material may further include one or more of, but not limited to, mesocarbon microbead (MCMB for short), hard carbon, soft carbon, silicon, a silicon-carbon composite, Li-Sn alloy, Li-Sn-O alloy, Sn, SnO, $SnO_2$, spinel-structured lithiated $TiO_2$-$Li_4Ti_5O_{12}$, or Li-Al alloy.

In some embodiments, the negative active material layer may include a binder, and optionally, may further include a conductive material. The binder strengthens bonding between particles of the negative active material and bonding between the negative active material and the current collector.

In some embodiments, examples of the binder include, but are not limited to, polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene butadiene rubber, acrylic (acrylated) styrene-butadiene rubber, epoxy resin, nylon, and the like.

In some embodiments, examples of the conductive material include, but are not limited to, a carbon-based material (for example, natural graphite, artificial graphite, carbon black, acetylene black, Ketjen black, and carbon fiber), a metal-based material (for example, metal powder, metal fiber, including copper, nickel, aluminum, silver, and the like), a conductive polymer (for example, a polyphenylene derivative), and any mixture thereof.

In some embodiments, the negative current collector may be selected from a copper foil, a nickel foil, a stainless steel foil, a titanium foil, foamed nickel, foamed copper, or a conductive-metal-clad polymer substrate.

In some embodiments, the negative active material is natural graphite, the conductive agent is Super P, and the binder is polyvinylidene difluoride (PVDF).

**Positive electrode:**

In some embodiments, the positive electrode includes a positive electrode plate. The positive electrode plate includes a positive current collector and an positive active material layer applied on the current collector. The positive active material includes a compound in which lithium ions can be reversibly intercalated and deintercalated. The positive active material may include a composite oxide. The composite oxide contains lithium and at least one selected from cobalt, manganese, or nickel. Specific types of the positive active material are not limited, and may be selected as required. The positive active material is at least one selected from lithium cobalt oxide $LiCoO_2$ (LCO), a lithium nickel cobalt manganese ternary material (NCM), lithium iron phosphate, or lithium manganese oxide. 1 of such compounds may be used alone, or 2 or more than 2 of such components may be used in combination.

In some embodiments, the positive active material may be coated with a coating on a surface. The compound for use in the coating may be non-crystalline or crystalline. The coating element included in the coating may include Mg, Al, Co, K, Na, Ca, Si, Ti, V, Sn, Ge, Ga, B, As, Zr, or a mixture thereof. The coating may be applied by any method as long as the method does not adversely affect performance of the positive active material. For example, the method may include any coating method well known to a person of ordinary skill in the art, such as spraying and dip-coating.

In some embodiments, the positive active material layer further includes a binder, and further optionally includes a conductive material. The binder improves bonding between particles of the positive active material and bonding between the positive active material and a current collector.

In some embodiments, examples of the binder include, but are not limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene butadiene rubber, acrylic (acrylated) styrene-butadiene rubber, epoxy resin, nylon, and the like.

In some embodiments, examples of the conductive material include, but are not limited to, a carbon-based material (for example, natural graphite, artificial graphite, carbon black, acetylene black, Ketjen black, and carbon fibers), a metal-based material (for example, metal powder, metal fibers, including copper, nickel, aluminum, silver, and the like), a conductive polymer (for example, a polyphenylene derivative), and any mixture thereof.

In some embodiments, the positive current collector may be, but not limited to, an aluminum (Al) foil.

In some embodiments, the positive active material is $LiFePO_4$, the conductive agent is Super P, and the binder is polyvinylidene difluoride (PVDF).

**Separator:**

In some embodiments, the electrochemical device includes a separator disposed between the positive electrode and the negative electrode to prevent a short circuit. The material and the shape of the separator used in the electrochemical device are not particularly limited, and may be based on any technology disclosed in the prior art.

In some embodiments, the separator may include a substrate layer and a surface treatment layer. The substrate layer is a non-woven fabric, film or composite film, which, in each case, is of a porous structure. The material of the substrate layer is at least one selected from polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film. The surface treatment layer is disposed on at least one surface of the substrate layer. The surface treatment layer may be a polymer layer or an inorganic compound layer, or a layer formed by mixing a polymer and an inorganic compound. The inorganic compound layer includes inorganic particles and a binder. The inorganic particles are one or more selected from alumina, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is one or more selected from polyvinylidene fluoride, poly(vinylidene fluoride-co-hexafluoropropylene), polyamide, polyacrylonitrile, polyacrylate, polyacrylic acid, polyacrylate, polyvinylpyrrolidone, polyvinyl ether, poly methyl methacrylate, polytetrafluoroethylene, and polyhexafluoropropylene. The polymer layer includes a polymer. The material of the polymer is at least one selected from polyamide, polyacrylonitrile, acrylate polymer, polyacrylic acid, polyacrylate, polyvinylpyrrolidone, polyvinyl ether, polyvinylidene fluoride, or poly(vinylidene difluoride-hexafluoropropylene).

In some embodiments, the lithium-ion battery according to this application is manufactured by stacking the positive electrode plate and the negative electrode plate.

In some embodiments, the lithium-ion battery according to this application may include an outer package. The outer package may be a hard shell such as a hard plastic shell, an aluminum shell, a steel shell, or the like. Alternatively, the

outer package of the secondary battery may be a soft package such as a pouch-type soft package. The material of the soft package may be plastic such as one or more of polypropylene (PP), polybutylene terephthalate (PBT), or polybutylene succinate (PBS).

In some embodiments, this application further provides a battery module. The battery module includes the lithium-ion battery. The battery module employs the lithium-ion battery, and therefore, possesses at least the same advantages as the lithium-ion battery. The battery module may include a plurality of lithium-ion batteries. The specific number of lithium-ion batteries included in a battery module may be adjusted depending on practical applications and capacity of the battery module.

In some embodiments, this application further provides a battery pack. The battery pack includes the battery module. The number of battery modules included in the battery pack may be adjusted depending on the practical applications and capacity of the battery pack.

A second aspect of this application provides an electrochemical device. The electrochemical device contains the lithium-ion battery according to the first aspect of this application. In some embodiments, the electrochemical device may be, but not limited to, a battery electric vehicle, a hybrid electric vehicle, a plug-in hybrid electric vehicle, an energy storage system, and the like. To meet the requirements of the electrochemical device for a high power and a high energy density of the lithium-ion battery, a battery pack or a battery module may be applied. In some other embodiments, the electrochemical device may be a mobile phone, a tablet computer, a notebook computer, or the like. The electrochemical device is generally required to be thin and lightweight, and may use a lithium-ion battery as a power supply.

This application is further described below with reference to some embodiments. Understandably, such embodiments are merely intended to illustrate this application but not to limit the scope of this application.

**Preparing a lithium-ion battery**

(1) Preparing a positive electrode

Mixing $LiFePO_4$ as a positive active material, Super P as a conductive agent, and polyvinylidene difluoride (PVDF) as a binder at a weight ratio of 96: 2: 2 in an N-methyl pyrrolidone (NMP) solvent, and stirring well to form a slurry. Coating a positive current collector aluminum foil with the slurry, performing drying and cold pressing to obtain a positive active material layer, and then performing cutting, slitting, and tab welding to obtain a positive electrode.

(2) Preparing a negative electrode

Embodiments 1 to 44 and Comparative Embodiments 1 to 5:

Mixing natural graphite of different OI values, Super P as a conductive agent, and sodium carboxymethyl cellulose as a thickener at a weight ratio of 95: 2: 3 in an appropriate amount of deionized water solvent, and stirring well to form a homogeneous negative slurry. Coating a negative current collector copper foil with the slurry, performing drying and cold pressing to obtain a negative active material layer, and then performing cutting, slitting, and tab welding to obtain a negative electrode.

(3) Manufacturing an electrolytic solution

Embodiments 1 to 30 and Comparative Embodiments 1 to 3: Mixing well a specified amount of organic solvent that contains ethylene carbonate (EC) and diethyl carbonate (DEC) in an argon atmosphere glovebox in which the water content is less than 10 ppm, and dissolving a well-dried lithium salt $LiPF_6$ in the organic solvent to obtain an electrolytic solution. The weight percent of the lithium salt $LiPF_6$ is 12.5%, the weight percent of the ethylene carbonate (EC) is 26%, and the rest is DEC (the weight percent of each substance in the electrolytic solution is calculated based on the weight of the electrolytic solution). Adding the vinylene carbonate and the fluoroethylene carbonate into the electrolytic solution at a weight percent shown in Table 1.

Embodiments 31 to 44 and Comparative Embodiments 4-3: Mixing well a specified amount of organic solvent that contains ethylene carbonate (EC) and diethyl carbonate (DEC) in an argon atmosphere glovebox in which the water content is less than 10 ppm, and dissolving a well-dried lithium salt $LiPF_6$ in the nonaqueous solvent to obtain an electrolytic solution. The weight percent of the lithium salt $LiPF_6$ is 12.5%, the weight percent of the EC is 26%, the weight percent of the VC is 2.5%, the weight percent of the FEC is 1%, and the rest is DEC. The compound B is added into the electrolytic solution at a weight percent shown in Table 2.

(4) Preparing a separator

Using a polyethylene (PE) porous film as a separator, with a porosity of 35%.

(5) Preparing a lithium-ion battery

Stacking the positive electrode, the separator, and the negative electrode in sequence, letting the separator be located between the positive electrode and the negative electrode to serve a separation function, winding them to obtain a bare cell, placing the bare cell into an outer package foil made of an aluminum plastic film, injecting the prepared electrolytic solution into the bare cell that is dried, and performing steps such as vacuum sealing, static standing, chemical formation, shaping, and capacity grading to complete preparing a lithium-ion battery.

**Test method:**

1. Testing the cycle performance of the lithium-ion battery

Testing the normal-temperature cycle performance: Putting the finished product of the lithium-ion battery in the above embodiments and comparative embodiments into a 25 °C thermostat, and leaving the battery to stand for 30 minutes so that the lithium-ion battery reaches a constant temperature. Charging, after the lithium-ion battery reaches a constant temperature, the lithium-ion battery at a constant current of 1 C until the voltage reaches 3.6 V, and then charging the battery at a constant voltage of 3.6 V until the current is less than or equal to 0.05 C. Subsequently, discharging the battery at a constant current of 1 C until the voltage reaches 2.8 V, thereby completing a charge-and-discharge cycle. Measuring the thickness of the battery cell. Repeating the charge-and-discharge steps for 1000 cycles, and then recording the discharge capacity. Calculating the capacity retention rate according to the following formula by assuming that the first-cycle discharge capacity is 100% SOC:

Capacity retention rate at the end of a specified number of cycles = (discharge capacity at the end of the specified number cycles/first-cycle discharge capacity) × 100%.

Testing the cycle expansion rate of the negative electrode plate: Record the thickness of a cold-pressed negative electrode plate as $H_0$, fully charging a battery cell at the end of 1000 charge-and-discharge cycles, and then disassembling the battery and measuring the thickness of the corresponding negative electrode plate, denoted as $H_1$. Calculating the thickness change rate of the negative electrode plate as:

$$\text{Thickness change rate of the negative electrode plate} = (H_1/H_0 - 1)\times 100\%.$$

2. Testing the high-temperature storage performance of the secondary battery

Storage of a fully charged battery: Leaving a finished product of a lithium-ion battery in the above embodiments and comparative embodiments to stand in a 25 °C thermostat for 5 minutes, and then charging the battery at a constant current rate of 1 C until the voltage reaches 3.6 V. Subsequently, charging the battery at a constant voltage until the current is less than or equal to 0.05 C, and then leaving the battery to stand for another 5 minutes. Discharging the battery at a constant current rate of 1 C until the voltage reaches 2.8 V, and then charging the battery at a constant current rate of 1 C until the voltage reaches 3.6 V, and charging the battery at a constant voltage until the current is less than or equal to 0.05 C. Subsequently, putting the fully charged lithium-ion secondary battery into a 60 °C oven and storing the battery for 90 days. Taking out the lithium-ion battery at the end of the 90-day storage, and observing and recording the thickness change. The thickness growth rate is calculated as:

Thickness growth rate = (thickness after high-temperature storage - thickness before high-temperature storage)/thickness before high-temperature storage × 100%.

3. Measuring the direct-current resistance (DCR) of the lithium-ion secondary battery

Putting a finished product of a lithium-ion battery in the above embodiments and comparative embodiments into a 25 °C thermostat to stand for 5 minutes. Charging the battery at a constant current rate of 1 C until the voltage reaches 3.6 V, and then charging the battery at a constant voltage until the current is less than or equal to 0.05 C. Leaving the battery to

stand for 30 minutes. Discharging the battery at a current of 0.1 C for 10 seconds (during which the voltage is sampled at intervals of 0.1 second, with the measured voltage value recorded as $U_1$). Discharging the battery at a current of 1 C for 360 seconds (during which the voltage is sampled at intervals of 0.1 second, with the measured voltage value recorded as $U_2$). Repeating the charge-and-discharge steps for 5 cycles. "1 C" is a current value at which the rated capacity of the battery can be fully discharged within 1 hour.

Calculating the direct-current resistance (DCR) as: DCR = ($U_1$ - $U_2$)/(1 C - 0.1 C). The obtained DCR is a concentration polarization resistance in this application, and is a value measured at a 50% SOC (state of charge), that is, a 50% SOC DCR in an embodiment, measured in milliohms.

4. Determining the OI value of the negative electrode material

The OI value is determined with an X-ray diffractometer (such as a Bruker D8 Discover X-ray diffractometer) with reference to the standard JISK 0131-1996. A specific determining method is: Putting the negative electrode plate into the X-ray diffractometer directly, performing X-ray analysis to obtain a peak area $C_{004}$ of the (004) crystal plane diffraction peak and a peak area $C_{110}$ of the (110) crystal plane diffraction peak of the negative active material in the negative electrode plate, and calculating the OI value of the negative electrode plate as: OI value = $C_{004}/C_{110}$.

5. Determining the BET value of the negative electrode material

The BET specific surface area of the negative electrode may be determined by a method known in the art. For example, with reference to GB/T 19587-2017, the specific surface area is measured by a nitrogen adsorption-based specific surface area analysis method, and is calculated by a Brunauer Emmett Teller (BET) method. The nitrogen adsorption-based specific surface area analysis method may be performed by using a Tri Star II 3020 specific surface area and pore size analyzer of US-based Micromeritics Company. First, disassembling the battery in each embodiment and comparative embodiment to take out the negative electrode plate. Soaking the negative electrode plate in a dispersant so that the negative electrode material is dispersed into the dispersant (ethanol). Sonicating the solution for 30 minutes, and putting the sonicated material into a vacuum oven for drying. Finally, measuring the specific surface area of the negative electrode material by using a specific surface area tester.

6. Determining the $Dv_{50}$ value of the negative electrode material

In this application, the $Dv_{50}$ value of the negative active material may be determined by using a laser particle size analyzer (such as Malvern Mastersizer 300) with reference to the standard GB/T 19077.1-2016. $D_{v50}$ represents a particle diameter of the negative active material measured when the cumulative volume percent of the measured particles of the material reaches 50% of the total volume of all the particles of the material in a volume-based particle size distribution.

The prepared lithium-ion batteries are tested according to the above test methods, and the test results are shown in Table 1 and Table 2.

Table 1

| Embodiment | a | b% | c% | b+c | e | a/(b+c) | b/c | ex(b+c) | Capacity retention rate (%) | Thickness change rate of negative electrode plate (%) | DCR (mΩ) |
|---|---|---|---|---|---|---|---|---|---|---|---|
| Embodiment 1 | 3 | / | / | / | 3 | / | / | / | 88.1 | 32.6 | 8.6 |
| Embodiment 2 | 4 | / | / | / | 3 | / | / | / | 89.3 | 33.3 | 8.8 |
| Embodiment 3 | 5 | / | / | / | 3 | / | / | / | 89.7 | 37.5 | 9.3 |
| Embodiment 4 | 7 | / | / | / | 3 | / | / | / | 88.5 | 44.3 | 10.1 |
| Embodiment 5 | 4 | 5.6 | 4.4 | 10 | 3 | 0.4 | 1.3 | 30.0 | 88.6 | 29.4 | 17.6 |

(continued)

| Embodiment | a | b% | c% | b+c | e | a/(b+c) | b/c | ex(b+c) | Capacity retention rate (%) | Thickness change rate of negative electrode plate (%) | DCR (mΩ) |
|---|---|---|---|---|---|---|---|---|---|---|---|
| Embodiment 6 | 4 | 5.3 | 3.1 | 8.4 | 3 | 0.5 | 1.7 | 25.2 | 89.9 | 29.2 | 12.4 |
| Embodiment 7 | 4 | 3.2 | 2.4 | 5.6 | 3 | 0.7 | 1.3 | 16.8 | 91.7 | 29.1 | 10.7 |
| Embodiment 8 | 4 | 2.5 | 1 | 3.5 | 3 | 1.1 | 2.5 | 10.5 | 91.4 | 29.3 | 9.2 |
| Embodiment 9 | 4 | 1.7 | 1.2 | 2.9 | 3 | 1.4 | 1.4 | 8.7 | 90.9 | 30.1 | 9 |
| Embodiment 10 | 4 | 1.4 | 2.7 | 4.1 | 3 | 1.0 | 0.5 | 12.3 | 91.5 | 29.6 | 9.4 |
| Embodiment 11 | 4 | 2.4 | 3.2 | 5.6 | 3 | 0.7 | 0.8 | 16.8 | 91.6 | 29.5 | 9.9 |
| Embodiment 12 | 4 | 3.7 | 5.2 | 8.9 | 3 | 0.4 | 0.7 | 26.7 | 91.7 | 28.9 | 11 |
| Embodiment 13 | 4 | 4 | 6 | 10 | 3 | 0.4 | 0.7 | 30 | 89.8 | 28.5 | 13.4 |
| Embodiment 14 | 4 | 0.1 | 1 | 1.1 | 3 | 3.6 | 0.1 | 3.3 | 89.9 | 32.7 | 9 |
| Embodiment 15 | 4 | 3 | 1 | 4 | 3 | 1 | 3 | 12 | 90.9 | 29.4 | 9.9 |
| Embodiment 17 | 3 | 4.2 | 5.8 | 10 | 3 | 0.3 | 0.7 | 30 | 89.5 | 27.9 | 13.1 |
| Embodiment 18 | 3 | 1 | 0.7 | 1.7 | 3 | 1.8 | 1.4 | 5.1 | 88.8 | 31.7 | 8.8 |
| Embodiment 19 | 4 | 0.4 | 0.3 | 0.7 | 3 | 5.7 | 1.3 | 2.1 | 89.3 | 33.3 | 8.8 |
| Embodiment 20 | 4 | 0.5 | 1.8 | 2.3 | 3 | 1.7 | 0.3 | 6.9 | 90.1 | 32.2 | 8.9 |
| Embodiment 21 | 4 | 3.7 | 5 | 8.7 | 5 | 0.5 | 0.7 | 43.5 | 91.3 | 29.9 | 12.2 |
| Embodiment 22 | 3 | 3.5 | 6.5 | 10.0 | 5 | 0.3 | 0.5 | 50 | 89.1 | 28.8 | 14.3 |
| Embodiment 23 | 4 | 2.5 | 1 | 3.5 | 3 | 1.1 | 2.5 | 10.5 | 91.7 | 28.2 | 9.5 |
| Embodiment 24 | 4 | 2.5 | 1 | 3.5 | 3 | 1.1 | 2.5 | 10.5 | 92.5 | 27.4 | 9.5 |
| Embodiment 25 | 4 | 2.5 | 1 | 3.5 | 3 | 1.1 | 2.5 | 10.5 | 91.6 | 29.1 | 9.8 |
| Embodiment 26 | 4 | 2.5 | 1 | 3.5 | 2 | 1.1 | 2.5 | 7.0 | 88.2 | 28.3 | 11.1 |
| Embodiment 27 | 4 | 2.5 | 1 | 3.5 | 3.5 | 1.1 | 2.5 | 12.3 | 93.6 | 26.7 | 9 |

(continued)

| Embodiment | a | b% | c% | b+c | e | a/(b+c) | b/c | ex(b+c) | Capacity retention rate (%) | Thickness change rate of negative electrode plate (%) | DCR (mΩ) |
|---|---|---|---|---|---|---|---|---|---|---|---|
| Embodiment 28 | 4 | 2.5 | 1 | 3.5 | 4 | 1.1 | 2.5 | 14.0 | 93.8 | 27 | 9.6 |
| Embodiment 29 | 4 | 2.5 | 1 | 3.5 | 5 | 1.1 | 2.5 | 17.5 | 93.4 | 27.5 | 10.1 |
| Embodiment 30 | 4 | 2.5 | 1 | 3.5 | 6 | 1.1 | 2.5 | 21.0 | 90.5 | 31.8 | 20.5 |
| Comparative | 15 | / | / | / | 3 | / | / | / | 79.5 | 57.2 | 18.1 |
| Embodiment | a | b% | c% | b+c | e | a/(b+c) | b/c | e×(b+-c) | Capacity retention rate (%) | Thickness change rate of negative electrode plate (%) | DCR (mΩ) |
| Embodiment 1 | | | | | | | | | | | |
| Comparative Embodiment 2 | 4 | 8.5 | 4.5 | 13 | 3 | 0.3 | 1.9 | 39.0 | 82.3 | 32.1 | 28.6 |
| Comparative Embodiment 3 | 4 | 2.5 | 1 | 3.5 | 1 | 1.1 | 2.5 | 3.5 | 72.4 | 36.8 | 27.4 |

As can be seen from comparison between Embodiments 1 to 30 and Comparative Embodiments 1 to 3 in Table 1, when the OI value of the negative electrode material is small, the compacted density of the negative electrode plate is in an appropriate range, the direction selectivity of the natural graphite in a lithiation process is low, and the lithiation-induced expansion can be dispersed in all directions, thereby reducing the cycle expansion of the electrode plate and the battery. Because the SEI film formed by the vinylene carbonate and the fluoroethylene carbonate exhibits a high impedance, an appropriate amount of additives needs to be added on the premise of ensuring high performance. When the OI value of the negative electrode material is large, the cycle expansion of the electrode plate and the battery is severe, and the proportion of the end faces of the material is increased. Consequently, side reactions are increased on the surface, and more gas is generated. In this case, more vinylene carbonate and fluoroethylene carbonate are needed to protect the negative electrode material and alleviate the expansion and gassing problems. Therefore, when the values satisfy $0.3 \leq a/(b + c) \leq 6$, the lithium-ion battery exhibits high cycle performance and a low impedance. In addition, the vinylene carbonate primarily generates PEO-type polymer SEI films, and the fluoroethylene carbonate primarily generates LiF and other SEI films that contain inorganic components. An SEI film richly containing organic and inorganic constituents can be generated on the surface of the negative electrode on condition that the weight percent of the vinylene carbonate and the fluoroethylene carbonate satisfies the rations of $0.01 \leq b + c \leq 10$ and $0.5 \leq b/c \leq 2.5$. This film is tough and resilient to some extent, and can alleviate a series of problems such as deterioration of the cycle performance and storage performance arising from the damage to the SEI film caused by the volume expansion of the natural graphite. In addition, an appropriate electrolyte retention amount can improve the cycle performance of the battery.

Table 2

| Embodiment | BET value of the negative active material (f $m^2/g$) | Type and weight percent of compound B represented by Formula (II) (k%) | | | DCR (mΩ) | Thickness expansion rate (%) |
|---|---|---|---|---|---|---|
| | | Pyridine | 2-vinylpyridine | 2-fluoropyridine | | |
| Embodiment 27 | 1.3 | / | / | / | 9 | 13.7 |
| Embodiment 31 | 1 | / | / | / | 8.8 | 13.4 |
| Embodiment 32 | 1.5 | / | / | / | 9.1 | 13.9 |
| Embodiment 33 | 2.5 | / | / | / | 9.7 | 14.3 |
| Embodiment 34 | 3 | / | / | / | 10.1 | 15.6 |
| Comparative Embodiment 4 | 5 | / | / | / | 13 | 18.9 |
| Embodiment 35 | 1.5 | 0.005 | / | / | 9.3 | 11.2 |
| Embodiment 36 | 1.5 | 0.5 | / | / | 9.7 | 8.8 |
| Embodiment 37 | 1.5 | 1 | / | / | 10.6 | 8.6 |
| Embodiment 38 | 1.5 | 2 | / | / | 13.8 | 8.5 |
| Embodiment 39 | 1.5 | 2.5 | / | / | 15.2 | 8.5 |
| Embodiment 40 | 1.5 | / | 0.5 | / | 10 | 9.3 |
| Embodiment 41 | 1.5 | / | / | 0.5 | 9.7 | 9 |
| Embodiment 42 | 1.5 | 0.3 | 0.1 | / | 9.9 | 9.1 |
| Embodiment 43 | 1.5 | 0.3 | / | 0.1 | 9.6 | 8.9 |
| Embodiment 44 | 1.5 | 0.1 | 0.1 | 0.1 | 9.6 | 9.4 |
| Comparative Embodiment 5 | 1.8 | 4 | / | / | 19.9 | 8.7 |

In Embodiments 31 to 44 and Embodiment 27 versus Comparative Embodiments 4 and 5 shown in Table 2, when the BET value of the negative electrode material is overly large, the side reactions on the surface of the material will increase, thereby deteriorating the DCR and gassing. In addition, the moisture content in the material increases due to the large BET value, thereby further leading to an increase in the hydrogen fluoride (HF) gas. When the BET value of the negative electrode material is overly small, the lithium ions transport speed is slow, thereby impairing the cycle performance. Adding the nitrogen-containing heterocyclic compound B represented by Formula (II) in the electrolytic solution can significantly improve the high-temperature storage performance of the battery. That is mainly because the nitrogen-containing heterocyclic compound can form a stable SEI film on the surface of the negative electrode, thereby suppressing consumption of the solvent and other film-forming additives during cycling and storage. In addition, the nitrogen-containing cation moiety in the nitrogen-containing heterocyclic compound B represented by Formula (II) not only promotes dissociation of the lithium salt, but also coordinates with a Lewis base such as ethylene carbonate (EC) to improve the oxidation stability of the EC electrolytic solution. However, when the content of the nitrogen-containing heterocyclic compound is higher than a particular level, the storage performance is no more improved. This causes the formed SEI film to be overly thick, increases the impedance, and in turn, increases the DCR value. Therefore, the nitrogen-containing heterocyclic compound B represented by Formula (II) may be added in an appropriate amount to achieve the optimal performance.

Although illustrative embodiments have been demonstrated and described above, a person skilled in the art understands that the foregoing embodiments are never to be construed as a limitation on this application, and changes, replacements, and modifications may be made to the embodiments without departing from the principles and scope of this application.

## Claims

1. A lithium-ion battery, **characterized in that**, the lithium-ion battery comprises an electrolytic solution and a negative electrode plate, the electrolytic solution comprises an electrolyte additive, the electrolyte additive comprises vinylene carbonate and fluoroethylene carbonate, and the negative electrode plate comprises a negative active material; wherein
an OI value of the negative active material is a; based on a weight of the electrolytic solution, a weight percent of the vinylene carbonate is b%, and a weight percent of the fluoroethylene carbonate is c%; and a, b, and c satisfy:

$$0.3 \leq a/(b + c) \leq 6;$$

$$0.02 \leq b + c \leq 10;$$

and

$$0.1 < b/c < 3.$$

2. The lithium-ion battery according to claim 1, wherein the lithium-ion battery satisfies at least one of the following conditions:

$$(1)\ 0.4 \leq a/(b + c) \leq 3;$$

$$(2)\ 0.2 \leq b + c \leq 5;$$

or

$$(3)\ 0.5 \leq b/c \leq 2.5.$$

3. The lithium-ion battery according to claim 1 or 2, wherein the lithium-ion battery satisfies at least one of the following conditions:

(i) a falls within a range of: $2 \leq a \leq 15$;
(ii) b falls within a range of: $0.01 \leq b \leq 10$; or
(iii) c falls within a range of: $0.01 \leq c \leq 10$.

4. The lithium-ion battery according to any one of claims 1 to 3, wherein the lithium-ion battery satisfies at least one of the following conditions:

(I) a falls within a range of: $3 \leq a \leq 7$;
(II) b falls within a range of: $0.1 \leq b \leq 5$; or
(III) c falls within a range of: $0.1 \leq c \leq 5$.

5. The lithium-ion battery according to any one of claims 1 to 4, wherein an electrolyte retention coefficient of the lithium-ion battery is e; and b, c, and e satisfy: $0.01 \leq e \times (b + c) \leq 50$.

6. The lithium-ion battery according to any one of claims 1 to 5, wherein an electrolyte retention coefficient e of the lithium-ion battery falls within a range of: $1 \leq e \leq 7$.

7. The lithium-ion battery according to any one of claims 1 to 6, wherein a specific surface area of the negative active material is f $m^2/g$, and f falls within a range of: $1 \leq f \leq 3$.

**8.** The lithium-ion battery according to any one of claims 1 to 7, wherein the electrolytic solution comprises a compound B represented by Formula (II):

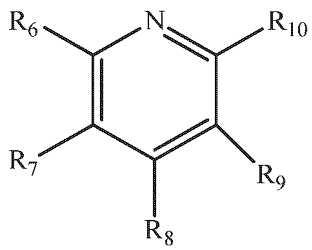

(II)

wherein,
$R_6$, $R_7$, $R_8$, $R_9$ and $R_{10}$ are each independently selected from hydrogen, a cyano group, a halogen atom, a $C_1$ to $C_{10}$ alkyl, a $C_2$ to $C_{10}$ alkenyl, a $C_2$ to $C_{10}$ alkynyl, a $C_3$ to $C_6$ heterocyclyl, a $C_5$ to $C_6$ aryl, a $C_5$ to $C_6$ heteroaryl, $-R_{11}-(C=O)-R_{12}-$, $-R_{11}-(C=O)-O-R_{12}-$, or $-R_{11}-(C=O)-NH-R_{12}-$, or any adjacent two of $R_6$, $R_7$, $R_8$, $R_9$, or $R_{10}$ are connected to each other to form a $C_1$ to $C_{10}$ ring structure; $R_{11}$ and $R_{12}$ are each independently selected from a single bond, the $C_1$ to $C_{10}$ alkyl, the $C_2$ to $C_{10}$ alkenyl, the $C_2$ to $C_{10}$ alkynyl, the $C_3$ to $C_6$ heterocyclyl, the $C_5$ to $C_6$ aryl, or the $C_5$ to $C_6$ heteroaryl; and the $C_1$ to $C_{10}$ alkyl, the $C_2$ to $C_{10}$ alkenyl, the $C_2$ to $C_{10}$ alkynyl, the $C_3$ to $C_6$ heterocyclyl, the $C_5$ to $C_6$ aryl, the $C_5$ to $C_6$ heteroaryl, or the $C_1$ to $C_{10}$ ring structure is optionally substituted by one or more amino groups, cyano groups, halogen atoms, $C_1$ to $C_3$ alkyls, $C_3$ to $C_6$ heterocyclyls, or $C_5$ to $C_6$ heteroaryls.

**9.** The lithium-ion battery according to claim 8, wherein the compound B represented by Formula (II) comprises at least one of: pyridine, 2-picoline, 2-vinylpyridine, 2- ethynylpyridine, 2-fluoropyridine, 2-cyanopyridine, 3-vinylpyridine, 3-fluoropyridine, 2,6-difluoropyridine, pentafluoropyridine, 2,2'-bipyridine, terpyridine, 1,8-naphthyridine, or 5,6,7,8-tetrahydroquinoline; and
based on the weight of the electrolytic solution, a weight percent of the compound represented by Formula (II) is k%, and k falls within a range of $0 \leq k < 3$.

**10.** An electrochemical device, **characterized in that** the electrochemical device comprises the lithium-ion battery according to any one of claims 1 to 9.

**INTERNATIONAL SEARCH REPORT**

International application No.
**PCT/CN2023/091190**

**A. CLASSIFICATION OF SUBJECT MATTER**

H01M10/0525(2010.01)i；H01M10/0567(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI: 电解液, 电解质, 碳酸亚乙烯酯, 氟代碳酸乙烯酯, 氟代碳酸亚乙酯, 石墨, OI, electrolyte, VC, FEC, graphite, 004, 110

**C. DOCUMENTS CONSIDERED TO BE RELEVANT**

| Category* | Citation of document, with indication, where appropriate, of the relevant passages | Relevant to claim No. |
|---|---|---|
| PX | CN 115411346 A (NINGDE AMPEREX TECHNOLOGY LTD.) 29 November 2022 (2022-11-29)<br>claims 1-11 | 1-10 |
| X | CN 113471514 A (NINGDE AMPEREX TECHNOLOGY LTD.) 01 October 2021 (2021-10-01)<br>description, paragraphs 4-199 | 1-10 |
| X | CN 111430795 A (NINGDE AMPEREX TECHNOLOGY LTD.) 17 July 2020 (2020-07-17)<br>description, paragraphs 4-200 | 1-10 |
| A | CN 114221035 A (SHANGHAI RUIPUQING INNOVATION ENERGY CO., LTD.) 22 March 2022 (2022-03-22)<br>entire document | 1-10 |
| A | WO 2021001315 A1 (SOLVAY SPECIALTY POLYMERS ITALY S.P.A.) 07 January 2021 (2021-01-07)<br>entire document | 1-10 |

☐ Further documents are listed in the continuation of Box C. ☑ See patent family annex.

* Special categories of cited documents:
- “A” document defining the general state of the art which is not considered to be of particular relevance
- “D” document cited by the applicant in the international application
- “E” earlier application or patent but published on or after the international filing date
- “L” document which may throw doubts on priority claim(s) or which is cited to establish the publication date of another citation or other special reason (as specified)
- “O” document referring to an oral disclosure, use, exhibition or other means
- “P” document published prior to the international filing date but later than the priority date claimed
- “T” later document published after the international filing date or priority date and not in conflict with the application but cited to understand the principle or theory underlying the invention
- “X” document of particular relevance; the claimed invention cannot be considered novel or cannot be considered to involve an inventive step when the document is taken alone
- “Y” document of particular relevance; the claimed invention cannot be considered to involve an inventive step when the document is combined with one or more other such documents, such combination being obvious to a person skilled in the art
- “&” document member of the same patent family

| Date of the actual completion of the international search | Date of mailing of the international search report |
|---|---|
| **05 July 2023** | **14 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2023/091190**

| Patent document cited in search report | Publication date (day/month/year) | Patent family member(s) | Publication date (day/month/year) |
|---|---|---|---|
| CN 115411346 A | 29 November 2022 | None | |
| CN 113471514 A | 01 October 2021 | None | |
| CN 111430795 A | 17 July 2020 | None | |
| CN 114221035 A | 22 March 2022 | None | |
| WO 2021001315 A1 | 07 January 2021 | KR 20220027878 A | 08 March 2022 |
| | | EP 3994741 A1 | 11 May 2022 |
| | | US 2022311005 A1 | 29 September 2022 |
| | | JP 2022538454 A | 02 September 2022 |
| | | CN 114097106 A | 25 February 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211211360